# EUROPEAN PATENT APPLICATION

(11) **EP 2 434 329 A1**
(43) Date of publication of application: **28.03.2012**
(21) Application number: 11182259.9
(22) Date of filing: 21.09.2011
(51) Int. Cl.: G02B 27/01, B60K 35/00, B60R 1/00, G02B 27/00

(54) **Automotive display apparatus**

(30) Priority: 22.09.2010 JP 2010211680
(71) Applicant: Kabushiki Kaisha Toshiba, Minato-ku, Tokyo 105-8001 (JP)
(72) Inventor: Kinoshita, Masakatsu, Tokyo, 105-8001 (JP); Tanaka, Masahiko, Tokyo, 105-8001 (JP)
(74) Representative: Henkel, Breuer & Partner

(57) **Abstract**

According to one embodiment, an automotive display apparatus (10, 20) includes an image projection unit (115) and a control unit (250). The image projection unit (115) is configured to project a light flux (112) including an image by using a reflecting unit (711) to reflect the light flux (112). The control unit (250) is configured to control an operation of the image projection unit (115) so that the image projection unit (115) moves a projection region (114) of the light flux (112) by an amount substantially proportional to (Vc)²×δ from a predetermined initial position in a horizontal direction orthogonal to an optical axis (114a) of the light flux (112) projected toward the predetermined initial position, where the Vc is a velocity of a vehicle (730) and the δ is a steering angle of the vehicle (730).

## Description

### FIELD

Embodiments described herein relate generally to an automotive display apparatus.

### BACKGROUND

In an automotive head-up display (HUD), light flux including display information such as vehicle speed, route guidance, etc., are reflected by a windshield, etc., to be projected toward a human viewer. Thereby, the human viewer visually confirms the display information simultaneously with external environment information.

When operating the vehicle, for example, in a curve, the posture of the human viewer may change from that when travelling straight. The position of an eye of the human viewer also changes as the posture changes according to the traveling state. It is necessary for the light flux to be projected toward the eye even in the case where the position of the eye changes.

Conventionally, methods have been considered to adjust the display position according to, for example, the turning direction of the vehicle.

However, conventional methods are insufficient because the precision of the control of the projection position of the light flux is low.

### BRIEF DESCRIPTION OF THE DRAWINGS

FIG. 1 is a schematic view illustrating the configuration of an automotive display apparatus according to a first embodiment;
FIG. 2 is a graph illustrating experimental results regarding the travel of the vehicle;
FIG. 3 is a graph illustrating operation of the automotive display apparatus according to the first embodiment;
FIG. 4 is a graph illustrating another operation of the automotive display apparatus according to the first embodiment;
FIG. 5 is a graph illustrating another operation of the automotive display apparatus according to the first embodiment;
FIG. 6 is a graph illustrating another operation of the automotive display apparatus according to the first embodiment;
FIG. 7 is a schematic view illustrating the configuration of an automotive display apparatus according to a second embodiment; and
FIG. 8 is a graph illustrating operations of an automotive display apparatus according to a third embodiment.

### DETAILED DESCRIPTION

In general, according to one embodiment, an automotive display apparatus includes an image projection unit and a control unit. The image projection unit is configured to project a light flux including an image by using a reflecting unit to reflect the light flux. The control unit is configured to control an operation of the image projection unit so that the image projection unit moves a projection region of the light flux by an amount substantially proportional to (Vc)²×δ from a predetermined initial position in a horizontal direction orthogonal to an optical axis of the light flux projected toward the predetermined initial position, where the Vc is a velocity of a vehicle and the δ is a steering angle of the vehicle.

Embodiments will be described hereinafter with reference to the accompanying drawings.

In the specification and the drawings of the application, components similar to those described in regard to a drawing thereinabove are marked with like reference numerals, and a detailed description is omitted as appropriate.

### First embodiment

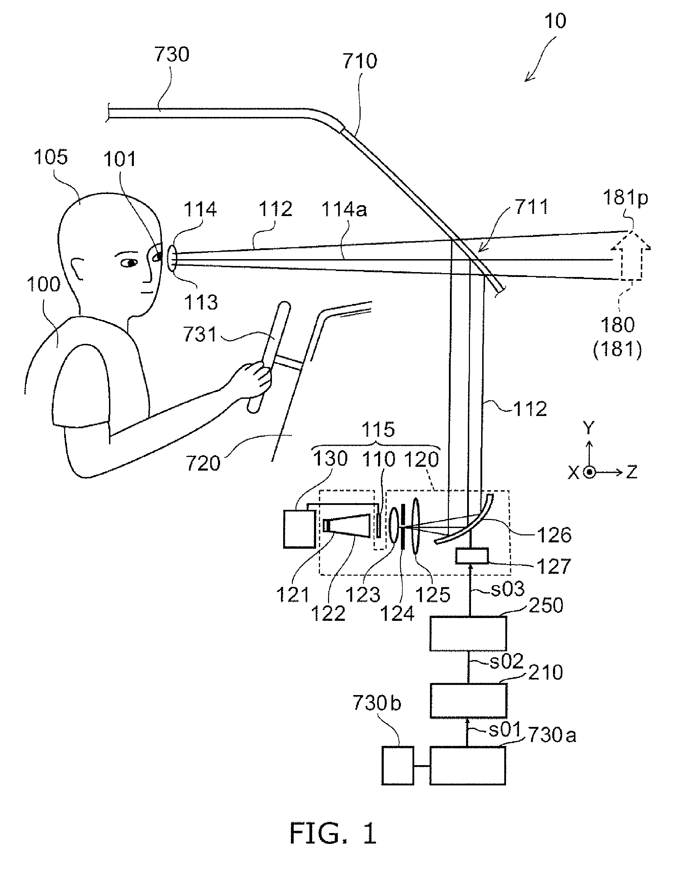

FIG. 1 is a schematic view illustrating the configuration of an automotive display apparatus according to a first embodiment.

As illustrated in FIG. 1, the automotive display apparatus 10 according to the embodiment is mounted in a vehicle 730. The vehicle 730 includes any moving body in which a person can ride and operate such as, for example, a four-wheeled vehicle, a three-wheeled vehicle, a truck, a bus, etc.

The automotive display apparatus 10 projects a light flux 112 including an image toward a human viewer 100 riding in the vehicle 730 by using a reflecting unit 711 to reflect the light flux 112. The human viewer 100 is a driver capable of operating, for example, a steering apparatus 731 (handlebars or a steering wheel) of the vehicle 730.

The reflecting unit 711 may include, for example, a combiner.

The reflecting unit 711 may be, for example, at least a portion of a windshield unit 710. The windshield unit 710 may include a windshield of the vehicle 730. The reflecting unit 711 is provided on, for example, the interior side of the windshield of the vehicle 730.

The reflecting unit 711 is provided, for example, in a surface of the windshield on the interior side of the vehicle 730. The reflecting unit 711 may be provided apart from the windshield on the interior side of the vehicle 730. The reflecting unit 711 may be included in the automotive display apparatus 10. The reflecting unit 711 may be storable in a housing included in the automotive display apparatus 10.

The automotive display apparatus 10 includes an image projection unit 115, an information acquisition unit 210, and a control unit 250.

The information acquisition unit 210 acquires vehicle information s01 including velocity information regarding a velocity Vc of the vehicle 730 and steering angle information regarding a steering angle δ of the vehicle 730. The information acquisition unit 210 acquires, for example, the vehicle information s01 from a vehicle information control unit 730a provided in the vehicle 730. Other than the velocity information and the steering angle information, the vehicle information s01 may include any information regarding the vehicle 730. The velocity information and the steering angle information may be acquired as a digital signal or an analog signal. The vehicle information s01 may further include acceleration information regarding to an acceleration of the vehicle 730. The automotive display apparatus 10 may further include an acceleration meter 730b. Description for the acceleration is provided later.

The velocity information is information regarding the velocity Vc and may be, for example, information measured by a speedometer provided in the vehicle 730. The velocity information may be a number of rotations of the wheel, etc. For example, the velocity Vc is derivable based on the number of rotations of the wheel. Thus, the velocity information includes any information capable of deriving the velocity Vc.

The steering angle information is information regarding the steering angle δ and may be, for example, information measured by a measurement apparatus configured to measure an angle of the steering apparatus 731. The steering angle information may include a value measured by an apparatus configured to measure the state of any mechanism included in the process of changing the angle of the wheel by, for example, an operation of the steering apparatus. The steering angle δ is derivable based on, for example, the angle of a gear that controls the angle of the wheel, etc. Thus, the steering angle information includes any information capable of deriving the steering angle δ.

The image projection unit 115 projects the light flux 112 toward the human viewer 100 by using the reflecting unit 711 to reflect the light flux 112. The image projection unit 115 includes, for example, an image data generation unit 130, an image generation unit 110, and a projection unit 120.

The image data generation unit 130 generates image data corresponding to an image including a display object 180 and supplies the image data to the image generation unit 110.

The display object 180 is an object provided in the image presented by the automotive display apparatus 10 to the human viewer 100. The display object 180 includes, for example, information regarding operation information of the vehicle 730 in which the automotive display apparatus 10 is mounted. The display object 180 may include various content such as arrows illustrating the velocity and the travel direction of the vehicle 730, the state of the transmission, etc. The display object 180 may include information regarding route guidance of the vehicle 730.

The image generation unit 110 may include, for example, an optical switch such as a liquid crystal display apparatus (an LCD) and the like. The image generation unit 110 forms an image on the screen of the image generation unit 110 based on the supplied image data from the image data generation unit 130.

The projection unit 120 may include, for example, various light sources, lenses, mirrors, and various optical elements configured to control the divergence angle (the diffusion angle).

In the specific example, the projection unit 120 includes a light source 121, a tapered light guide 122, a light source side lens 123, an aperture 124, an emerging side lens 125, and an emerging-side mirror 126.

The light source 121 produces light used to form the light flux 112. Along the travel direction of the light used to form the light flux 112, the tapered light guide 122 is disposed between the light source 121 and the emerging-side mirror 126, the light source side lens 123 is disposed between the tapered light guide 122 and the emerging-side mirror 126, the aperture 124 is disposed between the light source side lens 123 and the emerging-side mirror 126, and the emerging side lens 125 is disposed between the aperture 124 and the emerging-side mirror 126.

In the specific example, the image generation unit 110 (e.g., the LCD) is disposed between the tapered light guide 122 and the light source side lens 123.

The light source 121 may include various light sources such as an LED (Light Emitting Diode), a high pressure mercury lamp, a halogen lamp, a laser, etc. By using an LED as the light source 121, the power consumption can be reduced; and the apparatus can be lighter and smaller.

Various modifications are possible for the configurations of the image data generation unit 130, the image generation unit 110, and the projection unit 120. The dispositions of the components included in the image generation unit 110 and the components included in the projection unit 120 are arbitrary. For example, the image generation unit 110 (and the components included therein) may be inserted between the components included in the projection unit 120.

For example, the light emitted from the light source 121 is controlled by the tapered light guide 122 to have a divergence angle within some range. Then, the light becomes the light flux 112 including the image including the prescribed display object 180 by passing through the image generation unit 110.

In the specific example, the emerging-side mirror 126 has a concave configuration. Thereby, the image of the image information included in the light flux 112 is enlarged and projected toward the human viewer 100.

The light flux 112 is reflected by the emerging-side mirror 126, and subsequently is reflected by the reflecting unit 711 to reach an eye 101 of the human viewer 100.

The human viewer 100 perceives an image 181 (a virtual image) of the display object 180 formed at the position of an image formation position 181p via the reflecting unit 711. Thus, the automotive display apparatus 10 can be used as a HUD.

The emerging-side mirror 126 may be movable. For example, the light flux 112 may be appropriately projected toward the eye 101 by adjusting the position and/or the angle of the emerging-side mirror 126 manually or automatically to match the position and/or the movement of the head 105 of the human viewer 100.

The image projection unit 115 further includes a drive unit 127. The drive unit 127 includes a motor and the like configured to change the angle, the position, etc., of the optical element included in the image projection unit 115. In the specific example, the drive unit 127 changes the angle, the position, etc., of the emerging-side mirror 126. The embodiment is not limited thereto; and the drive unit 127 may change the angle, the position, etc., of any optical element included in the image projection unit 115. The emergence direction of the light flux 112 is changed by the angle and/or the position of the optical element being changed by the drive unit 127. Thereby, for example, a projection position 113 of the light flux at the position of the human viewer 100 is controlled.

Various modifications other than the examples recited above are possible for the image projection unit 115.

The image projection unit 115 of the automotive display apparatus 10 is provided, for example, in the vehicle 730. The image projection unit 115 may be provided, for example, in an inner portion of a dashboard 720 of the vehicle 730 as viewed by the human viewer 100.

On the other hand, it is not always necessary for the image data generation unit 130 to be provided integrally with the image projection unit 115; and the image data generation unit 130 may be disposed, for example, not in the interior of the dashboard 720 but at any location of the vehicle 730. The image data from the image data generation unit 130 is supplied to the image projection unit 115 (of the image generation unit 110) using a wired or wireless method of an electrical signal, an optical signal, etc.

In the automotive display apparatus 10, the human viewer 100 views the image included in the light flux 112 by one eye or by both eyes.

For example, in the case of viewing by one eye 101,, the image projection unit 115 projects the light flux 112 toward one of the eyes of the human viewer 110 and does not project the light flux 112 toward both of the eyes of the human viewer 100. It is possible to keep a resynthesis error low by making the human viewer 100 recognize images as different images of a scene in a three dimension and the image in a two dimension. In such a case, the light flux 112 is projected toward the one eye 101 and is not projected toward both eyes by controlling the spread of the light flux 112 to be continuously not viewed by both eyes. The size of a projection region 114 of the light flux 112 at the position of the human viewer 100 is set to be a size that enters the one eye 101 and does not enter both eyes. Because the spacing between the eyes (the pupils) of the human viewer 100 is, for example, 60 millimeters (mm) to 75 mm, the width of the light flux 112 in the lateral direction (the width of the projection region 114 in the lateral direction) at the position of the human viewer 100 is set to be, for example, not more than 75 mm. Further, this may be set to be not more than 65 mm and may be set to be not more than 60 mm. The size of the projection region 114 is controlled, for example, mainly by the optical element included in the projection unit 120.

The reflecting unit 711 (e.g., the windshield unit 710) is disposed at a position having a distance from the human viewer 100 not less than 21.7 cm. Thereby, in the case where the human viewer 100 views the image with the one eye 101, the perceived sense of depth is increased; and it can be easy for the display object 180 to be perceived at the desired depthward position.

The image projection unit 115 may project the light flux 112 toward both eyes of the human viewer 100. The human viewer 100 may view the display object 180 with both eyes.

The control unit 250 controls the position of the light flux 112 (the projection position 113) at the position of the human viewer 100 by controlling the image projection unit 115.

Herein, for convenience of description, the direction from the rear toward the front of the vehicle 730 is taken as a Z-axis direction. The direction from the left toward the right of the vehicle 730 is taken as an X-axis direction. The direction upward from under the vehicle 730 is taken as a Y-axis direction. The direction from the left toward the right as viewed from the rear toward the front of the vehicle 730 is taken as a positive X-axis direction.

The control unit 250 controls, for example, the position of the light flux 112 (the projection position 113) in the X-Y plane at, for example, the position of the human viewer 100 in the Z-axis direction. In particular, the position of the light flux 112 along the X-axis direction is modified.

For example, the vehicle information s01 or control information s02 based on the vehicle information from the information acquisition unit 210 is supplied to the control unit 250. The control unit 250 supplies, for example, a control signal s03 to the drive unit 127 based on the control information s02.

The drive unit 127 modifies the projection position 113 by modifying the angle, the position, etc., of the optical element (e.g., the emerging-side mirror 126) included in the image projection unit 115 based on the control signal s03.

It is not always necessary for the control unit 250 to be integrally provided with the image projection unit 115; and the control unit 250 may be disposed at any location of the vehicle 730. The control signal s03 from the control unit 250 is supplied to the image projection unit 115 using a wired or wireless method of an electrical signal, an optical signal, etc.

When changing the position of the light flux 112 (the projection position 113) at the position of the human viewer 100, the control unit 250 according to the embodiment changes the projection position 113 by a distance of kx(Vc)²xδ using the velocity Vc and the steering angle δ acquired by the information acquisition unit 210 and the coefficient k. A movement distance L1 of the projection position 113 when the projection position 113 is changed may be kx(Vc)²xδ. Here, the movement distance L1 of the projection position 113 when the projection position 113 is changed may be kxPr, where a traveling state parameter Pr is (Vc)²xδ.

For example, the coefficient k may be not less than about 4x 10⁻⁴ and not more than about 8x 10⁻⁴ in the case where, for example, the units of the velocity Vc are km/h (kilometers per hour) and the units of the steering angle δ are degrees. For example, the movement distance L1 of the projection position 113 may be not less than 19.2 mm and not less than 38.4 mm in the case where the velocity Vc is 40 km/h and the steering angle δ is 30 degrees. The coefficient k was determined experimentally as described below. The coefficient k changes in the case where the units of the velocity Vc, the steering angle δ, and the movement distance L1 are changed.

The coefficient k is modifiable based on the specifications of the vehicle 730 (e.g., the height of the vehicle 730, the configuration of the seat, etc.), the characteristics and/or the preferences of the human viewer 100, etc.

Herein, for example, the travel direction of the vehicle 730 is taken to change to the right when the steering angle δ is positive. The travel direction of the vehicle 730 is taken to change to the left when the steering angle δ is negative.

The movement direction of the projection position 113 for a positive steering angle δ is the positive X-axis direction. The projection position 113 is moved to the right from the projection position 113 of the straight travel of the vehicle 730 when the travel direction of the vehicle 730 changes to the right (e.g., a right curve or when turning right).

The movement direction of the projection position 113 for a negative steering angle δ is the negative X-axis direction. The projection position 113 is moved to the left from the projection position 113 of the straight travel of the vehicle 730 when the travel direction of the vehicle 730 changes to the left (e.g., a left curve or when turning left).

Thus, the image can be projected toward the human viewer 100 with high positional precision by controlling the movement distance L1 of the projection position 113 when the projection position 113 is changed to be kx(Vc)²xδ.

An example of the experimental results from which this configuration was derived will now be described.

In the experiments described below, images of the human viewer 100 (the driver) were recorded when the vehicle 730 was traveling in a left curve; and the position of the eye 101 of the human viewer 100 was measured from the results.

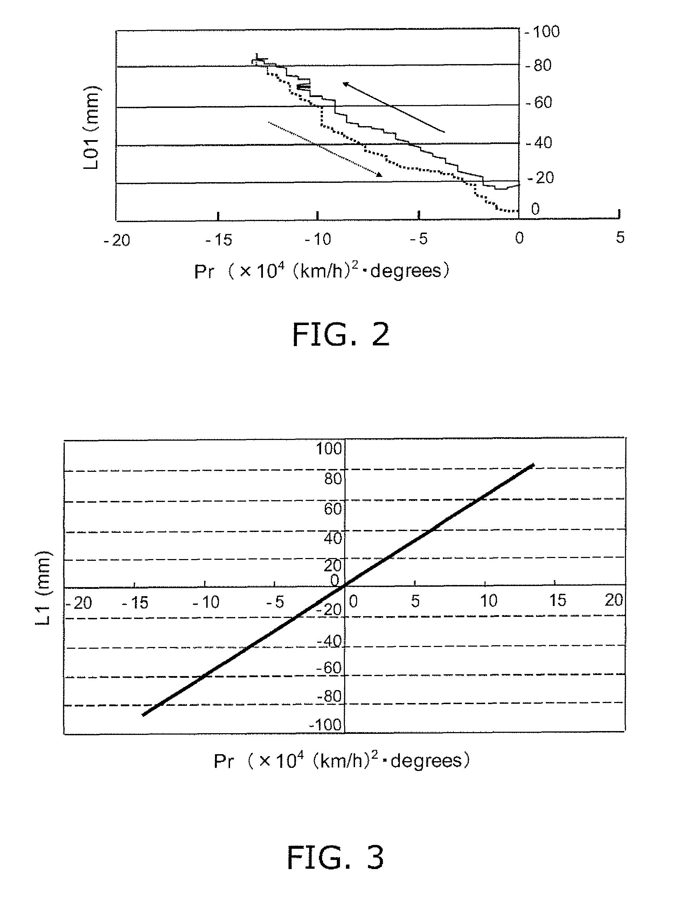

FIG. 2 is a graph illustrating experimental results regarding the travel of the vehicle.

In FIG. 2, the horizontal axis is the traveling state parameter Pr. The vertical axis is the position of the eye 101 and is a movement distance L01 from a reference position.

This result is an example in which the velocity Vc is substantially constant and the steering angle δ changes.

As illustrated in FIG. 2, it was learned that the movement distance L01 of the eye 101 changes substantially linearly with the traveling state parameter Pr. The movement direction of the eye 101 in this case was the negative X-axis direction (i.e., to the left).

It can be seen from FIG. 2 that the movement distance L01 of the eye 101 differs between when the absolute value of the traveling state parameter Pr is increasing (when entering a curve) and when the absolute value of the traveling state parameter Pr is decreasing (when exiting the curve). The movement distance L01 of the eye 101 when the absolute value of the traveling state parameter Pr is increasing is greater than the movement distance L01 of the eye 101 when the absolute value of the traveling state parameter Pr is decreasing.

Although this experimental example is the case of a left curve, similar results were obtained for the case of a right curve. However, the movement direction of the eye 101 in the case of the right curve was the positive X-axis direction, which was the reverse of the case of the left curve.

Thus, the head 105 (the eye 101) of the human viewer 100 moves to the left in the left curve. It is conceivable that this is caused by an acceleration to the right being applied to the human viewer 100 in the left curve and the human viewer 100 moving (tilting) the head 105 to the left as an action against this acceleration. Conversely, the head 105 (the eye 101) of the human viewer 100 moves to the right in the right curve. It is conceivable that this is caused by an acceleration to the left being applied to the human viewer 100 in the right curve and the human viewer 100 moving (tilting) the head 105 to the right as an action against this acceleration.

From this result, the light flux 112 can be projected toward the eye 101 with good precision by controlling the position of the light flux 112 (the projection position 113) at the position of the human viewer 100 based on the traveling state parameter Pr to correspond to the change of the travel direction of the vehicle 730 and the accompanying change of the position of the head 105 (specifically, the eye 101) of the human viewer 100.

FIG. 3 is a graph illustrating operation of the automotive display apparatus according to the first embodiment.

In FIG. 3, the horizontal axis is the traveling state parameter Pr; and the vertical axis is the movement distance L1 from the reference position (a predetermined initial position) of the projection position 113 of the light flux 112 at the position of the human viewer 100. A positive traveling state parameter Pr corresponds to the case where the travel direction changes to the right (e.g., a right curve, a right turn, etc.); and a negative traveling state parameter Pr corresponds to the case where the travel direction changes to the left (e.g., a left curve, a left turn, etc.).

In the automotive display apparatus 10 according to the embodiment as illustrated in FIG. 3, the movement distance L1 of the projection position 113 of the light flux 112 is substantially proportional to the traveling state parameter Pr.

In other words, the control unit 250 changes the projection position 113 by a distance of kx(Vc)²xδ using the velocity Vc and the steering angle δ acquired by the information acquisition unit 210 and the coefficient k when changing the position of the light flux 112 (the projection position 113) at the position of the human viewer 100. The control unit 250 is configured to control the operation of the image projection unit 115 so that the image projection unit 115 moves the projection region 114 of the light flux 112 by an amount (the movement distance L1), which is substantially proportional to (Vc)²xδ in the horizontal direction. The horizontal direction is orthogonal to an optical axis 114a of the light flux projected toward the predetermined initial position. For example, the control unit 250 is configured to determine the amount (the movement distance L1) substantially proportional to (V_{c})²xδ by a calculation by using the Vc and the δ.

The movement distance L1 is positive (the direction from the left of the vehicle 730 to the right) when the traveling state parameter Pr is positive (e.g., the direction from the left of the vehicle 730 to the right); and the movement distance L1 is negative (the direction from the right of the vehicle 730 to the left) when the traveling state parameter Pr is negative (e.g., the direction from the right of the vehicle 730 to the left).

Thereby, the image can be projected toward the human viewer 100 with high positional precision.

In particular, in the automotive display apparatus 10, the width of the light flux 112 is set to be narrow in the case where the light flux 112 is viewed using the one eye 101. In such a monocular HUD, the precision of the control of the projection position 113 of the light flux 112 by conventional methods is low and impractical. Thus, the embodiment is an approach to solve new problems occurring in the monocular HUD.

In other words, in the automotive display apparatus 10, the width (the width in the lateral direction) of the projection region 114 of the light flux 112 at the position of the human viewer 100 is set to be, for example, not more than 75 mm; and the projection position 113 of the light flux 112 having such a narrow width is controlled as recited above. Thus, the effects of the embodiment are realized particularly markedly in the case where the light flux 112 has a narrow width.

The embodiment is advantageous in that high positional precision can be determined by a simple calculation based on the traveling state parameter Pr (i.e., (Vc)²xδ) by changing the movement distance L1 of the light flux 112 linearly with the traveling state parameter Pr.

However, it is unnecessary for the movement distance L1 of the light flux 112 to be strictly proportional to (Vc)²×δ; and an error may be included in the movement distance L1. For example, the movement distance L1 may be set to be within a prescribed range centered on k×(Vc)²×δ.

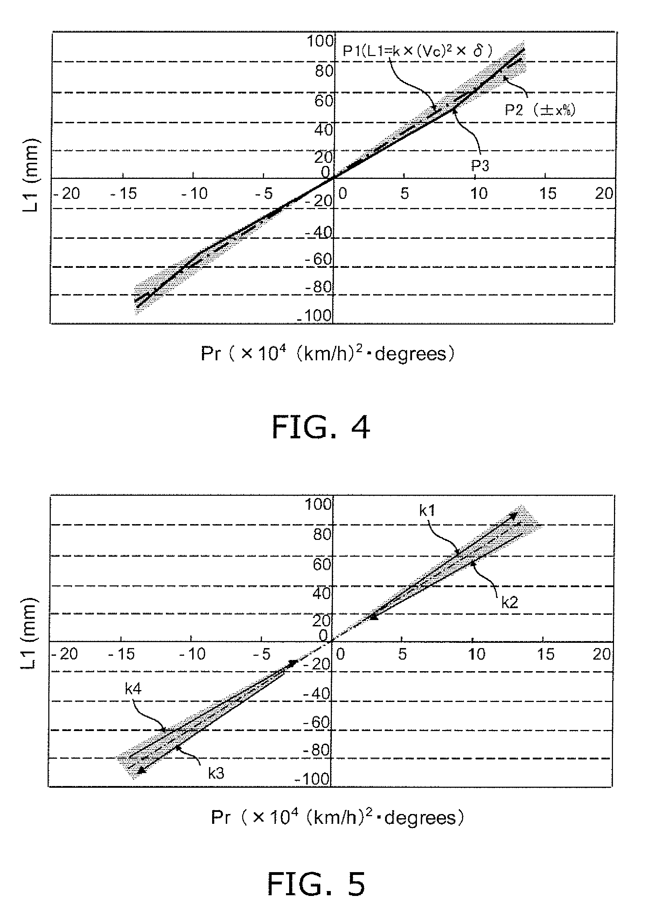

FIG. 4 is a graph illustrating another operation of the automotive display apparatus according to the first embodiment.

In FIG. 4, the horizontal axis is the traveling state parameter Pr; and the vertical axis is the movement distance L1 of the projection position 113 of the light flux 112 at the position of the human viewer 100.

As illustrated in FIG. 4, in a control method P1 in which the movement distance L1 of the projection position 113 is set to be proportional to (Vc)²xδ, the movement distance L1 can be controlled with a certain error. An example of the error is shown in FIG. 4 as an error range P2. The error range is, for example, a range of plus or minus x% of kx(Vc)²xδ. The movement distance L1 of the light flux 112 is controlled to be, for example, plus or minus 20% of kx(Vc)²xδ (i.e., x = 20).

For example, as in a control method P3, a rate of the change of the movement distance L1 with respect to (Vc)²xδ may be changed within the error range P2 (for example, plus or minus 20% of kx(Vc)²xδ). The movement distance L1 of the light flux 112 may be controlled to have a curved configuration (a zigzagging configuration) that changes within a range of the plus or minus 20% of kx(Vc)²xδ.

However, as described in regard to FIG. 2, the movement distance L1 of the light flux 112 is controlled to be substantially proportional (e.g., not more than plus or minus 20%) to the traveling state parameter Pr (i.e., (Vc)²xδ) to match the characteristic of the movement of the eye 101 of the human viewer 100.

Here, as described in regard to FIG. 2, the movement distance L01 of the eye 101 when the absolute value of the traveling state parameter Pr is increasing is greater than the movement distance L01 when decreasing.

FIG. 5 is a graph illustrating another operation of the automotive display apparatus according to the first embodiment.

In FIG. 5, the horizontal axis is the traveling state parameter Pr; and the vertical axis is the movement distance L1 of the projection position 113 of the light flux 112 at the position of the human viewer 100.

As illustrated in FIG. 5, a gradient of the straight line of the movement distance L1 with respect to the traveling state parameter Pr in increasing the movement distance L1 is larger than that in decreasing the movement distance L1. In other words, an absolute value of a proportional coefficient (the coefficient k) of the movement distance L1 with respect to the value of (Vc)²xδ in increasing the absolute value of the movement distance L1 is larger than that in decreasing the absolute value of the movement distance L1.

For the same traveling state parameter Pr, the absolute value of the movement distance L1 of the projection position 113 of the light flux 112 when the absolute value of the traveling state parameter Pr is increasing may be set to be greater than the absolute value of the movement distance L1 when the absolute value of the traveling state parameter Pr is decreasing.

In other words, the coefficient k (the absolute value thereof) when the absolute value of the traveling state parameter Pr ((Vc)²xδ) is increasing is set to be greater than the coefficient k (the absolute value thereof) when the absolute value of the traveling state parameter Pr ((Vc)²xδ) is decreasing.

For example, a first coefficient k1 when the traveling state parameter Pr is positive and the traveling state parameter

Pr is increasing is set to be greater than a second coefficient k2 when the traveling state parameter Pr is positive and the traveling state parameter Pr is decreasing.

For example, a third coefficient k3 when the traveling state parameter Pr is negative and the absolute value of the traveling state parameter Pr is increasing is set to be greater than a fourth coefficient k4 when the traveling state parameter Pr is negative and the absolute value of the traveling state parameter Pr is decreasing.

Thereby, it is possible to control the projection position 113 of the light flux 112 to better match the characteristic regarding the movement of the eye 101.

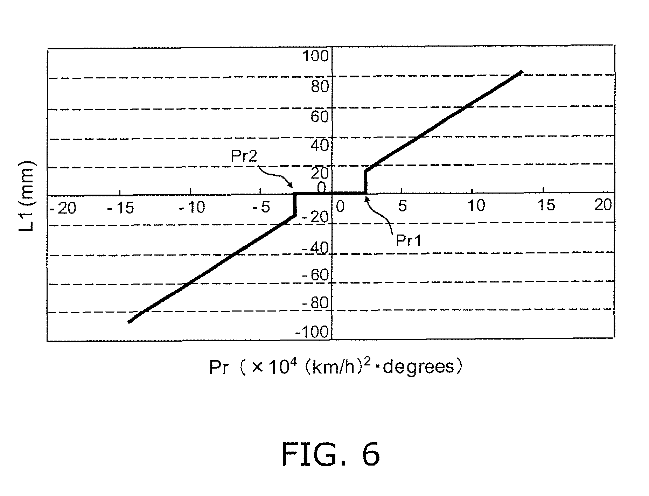

FIG. 6 is a graph illustrating another operation of the automotive display apparatus according to the first embodiment.

In FIG. 6, the horizontal axis is the traveling state parameter Pr; and the vertical axis is the movement distance L1 of the projection position 113 of the light flux 112 at the position of the human viewer 100.

As illustrated in FIG. 6, in this operation, regarding to the traveling state parameter Pr, a first threshold value Pr1 (e.g., a positive threshold value) and a second threshold value Pr2 (e.g., a negative threshold value) are determined. When the traveling state parameter Pr is not larger than the first threshold value Pr1 and not smaller than the second threshold value Pr2, the movement distance L1 is zero. When the traveling state parameter Pr is larger than the first threshold value Pr1, the movement distance L1 is a value that satisfies the relation of L1= k×Pr. When the traveling state parameter Pr is negative and is smaller than the second threshold value Pr2, the movement distance L1 is a value that satisfies the relation of L1= kxPr. When the traveling state parameter Pr is the first threshold or the second threshold value Pr2, the absolute value of the movement distance L1 is increased in stepwise.

In this example, the control unit starts the control to interlock the projection position 113 with the movement of the eye 101 by moving the projection position 113 of the light flux 112 when the absolute value of the traveling state parameter Pr exceeds a prescribed threshold value. The control unit 250 does not move the projection position 113 when the absolute value of the traveling state parameter Pr is not more than the threshold value.

For example, play (an insensitive region) is provided in the steering apparatus 731 of the vehicle 730. Therefore, there are cases where it is unnecessary to modify the projection position 113 in the range where the steering angle δ is not more than the prescribed angle.

The first threshold value Pr1 (e.g., the positive side) and the second threshold value Pr2 (e.g., the negative side) corresponding to the angle of the play of the steering apparatus 731 are predetermined for the traveling state parameter Pr. The control unit 250 performs a process in which the projection position 113 is not moved in the case where the absolute value of the obtained traveling state parameter Pr is not more than the absolute values of the first threshold value Pr1 and the second threshold value Pr2,; and the projection position 113 is moved when the absolute values of the first threshold value Pr1 and the second threshold value Pr2 are exceeded.

The control unit 250 changes the position of the light flux 112 (the projection position 113) when the absolute value of kx(Vc)²xδ is greater than the predetermined value and does not change the projection position 113 when the absolute value is not greater than the predetermined value.

Thereby, the image can be projected toward the human viewer with little incongruity and high positional precision.

### Second embodiment

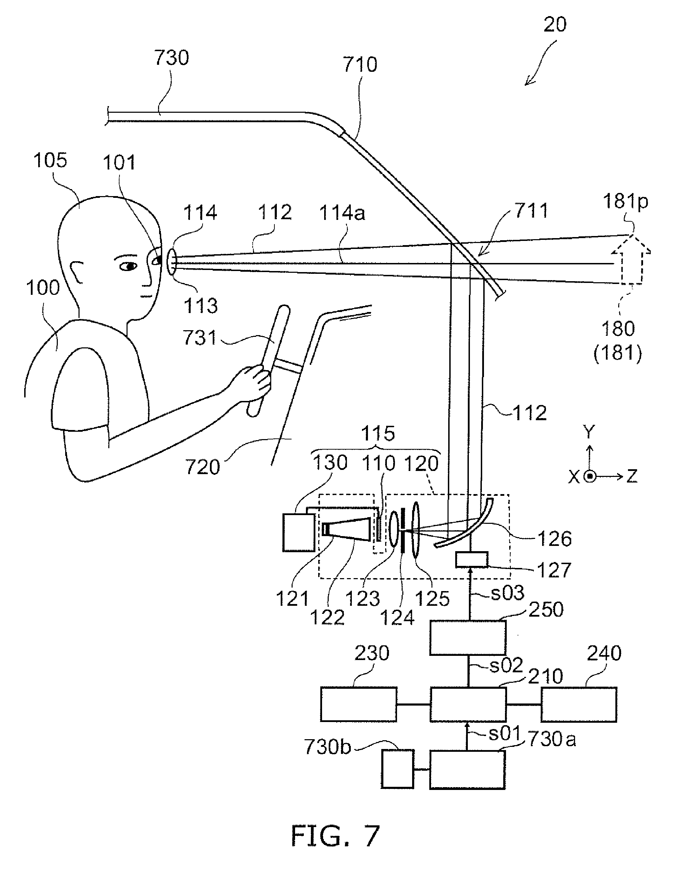

FIG. 7 is a schematic view illustrating the configuration of an automotive display apparatus according to a second embodiment.

The automotive display apparatus 20 according to the embodiment includes the image projection unit 115, the information acquisition unit 210, and the control unit 250 described above. The configurations thereof are similar to those of the automotive display apparatus 10 and a description is therefore omitted.

In the embodiment, the information acquisition unit 210 further acquires human viewer information including at least one selected from the body weight of the human viewer 100, the body height of the human viewer 100, the sitting height of the human viewer 100, the age of the human viewer 100, and a setting from the human viewer 100. The setting from the human viewer 100 is set by the human viewer 100 according to personal preferences (requirements) and is a setting that may be used to increase or decrease the coefficient k. The human viewer information may further include the gender of the human viewer.

For example, the user of the vehicle 730 inputs human viewer information such as that recited above; and the information acquisition unit 210 acquires the input human viewer information from an input unit 230 connected to the automotive display apparatus 10. The configuration of the input unit 230 recited above is arbitrary. The input unit 230 may be included in, for example, a CID (central information display) and the like. The input unit 230 may include any input device provided in the vehicle 730. The input unit 230 may be included in the automotive display apparatus 20.

The coefficient k can be defined based on the human viewer information acquired by the information acquisition unit 210. In other words, the coefficient k is modifiable based on the human viewer information.

It was learned that even for the same traveling state parameter Pr, the movement distance L01 of the eye 101 differs according to the characteristics of the human viewer 100 (e.g., the body weight of the human viewer 100, the body height of the human viewer 100, the sitting height of the human viewer 100, the age of the human viewer 100, individual differences of the human viewer 100, etc.). Therefore, the projection position 113 of the light flux 112 can be matched with higher precision to the position of the eye 101 of the human viewer 100 by setting the coefficient k based on the human viewer information regarding the human viewer 100.

In particular, it is desirable for the coefficient k to be adjustable according to the requirements of the human viewer 100. For example, the coefficient k is set to match the specifications of the vehicle 730 when, for example, the automotive display apparatus 10 is mounted in the vehicle 730 and the user starts to use the automotive display apparatus 10. Thereafter, as the user starts to use the automotive display apparatus 10, there may be cases where the correspondence between the characteristic of the movement distance L01 of the eye 101 and the characteristic of the movement distance L1 of the projection position 113 using the set coefficient k is low due to the characteristics of the user (habits when operating, etc.). In such a case, the ease of use can be better by the user (the human viewer 100) setting the coefficient k to match the characteristics of the user.

The automotive display apparatus 20 may further include a human viewer information storage unit 240. The human viewer information storage unit 240 stores the human viewer information regarding the human viewer 100. The coefficient k is defined based on the human viewer information stored in the human viewer information storage unit 240. The coefficient k is modifiable based on the human viewer information.

It is complicated to input the human viewer information each time the automotive display apparatus 20 is used. Better convenience is provided by storing the human viewer information inputted to the information acquisition unit 210 in the human viewer information storage unit 240 and by extracting the human viewer information from the human viewer information storage unit 240 when necessary.

In particular, better convenience is provided by storing the human viewer information of multiple users in the case where the multiple users take turns using the automotive display apparatus 20.

### Third embodiment

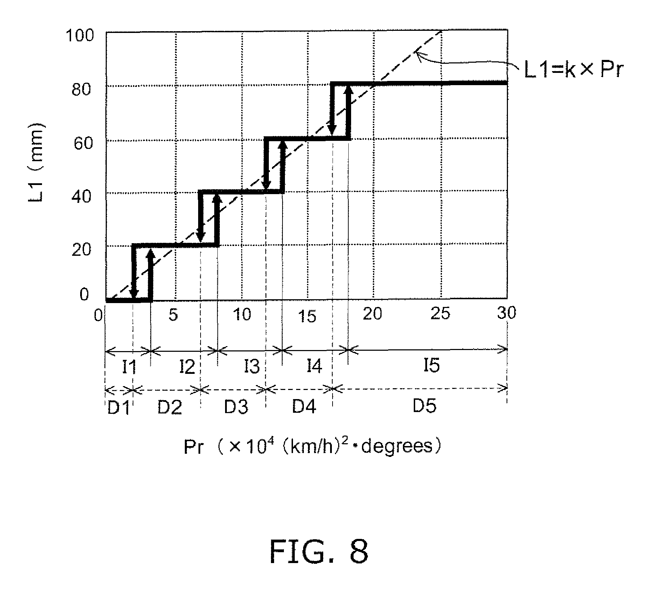

FIG. 8 is a graph illustrating operation of an automatic display apparatus according to a third embodiment.

As shown in FIG. 8, in this example, the movement distance L1 of the projection position 113 changes in stepwise in response to the change of value of the traveling state parameter Pr (= (Vc)²×δ). In other words, a plurality of zones are provided to the calculated values of Pr For example, in increasing the movement distance L1, a first to a fifth zone I1 to 15 are predetermined. In decreasing the movement distance L1, a first to a fifth zone D1 to D5 are predetermined. In this example, the first to the fifth zone D1 to D5 are different from the first to the fifth zone I1 to 15, respectively. The embodiment is not limited thereto, and the first to the fifth zone D1 to D5 may be same as the first to the fifth zone 11 to 15, respectively. A number of the zone is not limited to five and arbitrary.

In this example, the movement distance L1 is zero in the case of the first zone I1. In the case of the second zone I2, the movement distance L1 is a constant value (20mm in this example) which is larger than zero. In the case of the third zone I3, the movement distance L1 is another constant value (40mm in this example) which is larger than that for the second zone. In the same way, the movement distance L1 is changed according to the zones. At the boundary (the threshold) between the zones, the movement distance L1 is changed in stepwise.

For example, in a computer provided in the control unit 250, the obtained values of the traveling state parameter Pr are compared with the plurality of threshold values. The movement distance L1 is determined based on the result. The movement distance L1 is set as discrete values. At this time, as illustrated in FIG. 8, the whole relationship between the traveling state parameter Pr and the movement distance L1 is represented by L1 = k×Pr.

In this example, a change width of the movement distance L1 is 20 mm. However, the embodiment is not limited thereto, and the change width of the movement distance L1 is arbitrary. For example, a stepping motor or the like is used for the drive unit 127. More practical control is allowed by the movement distance L1 being changed in stepwise. Thus, the control unit 250 performs to control the image projection unit 115 not to operate in a zone predetermined with respect to the movement distance L1. The zone may be changed according to the purpose or the intention of the control design. In the examples recited above, the zones are set to obtain the effect described with respect to the examples.

In the example shown in FIG. 8, the first to the fifth zone D1 to D5 are different from the first to the fifth zone I1 to 15, respectively. In other words, the hysteresis characteristics are introduced into the control of the movement distance L1. For example, even if the vehicle 730 is turning around to a given direction on the way of curve, the steering angle δ may repeatedly change slightly. In this case use of the hysteresis characteristics allows the practical control.

In the automotive display apparatus according to the embodiment, for example, before starting to operate the vehicle, the projection position 113 of the light flux 112 is initialized. In the initialization, for example, a center position of the projection region 114 of the light flux 112 is set to a position of the one eye 101 of the human viewer 100. For example, the control unit 250 determines the movement distance L1 proportional to (Vc)²×δ by a calculation by using the Vc and the δ during the operation. When the control unit 250 controls the projection unit 115 to move the projection region 114, the control unit 250 makes the projection region 114 of the light flux 112 move by the determined movement distance L1 from the initial position. Thereby, even when the position of the eye 101 of the human viewer 100 on the curve or the like, the light flux 112 can be incident to the intended one eye 101.

However, the embodiment is not limited thereto. For example, acceleration may be used to determine the movement distance L1 proportional to (Vc)²×δ

### Fourth embodiment

In the fourth embodiment, the control unit 250 determines the movement distance L1 by using the acceleration in the lateral direction (horizontal direction). The value of Pr ((Vc)²×δ) is proportional to a centrifugal force when the vehicle 730 makes a curve. The centrifugal force is expressed by massx(velocity)²/radius of gyration. The radius of gyration is substantially proportional to wheelbase/steering angle. Thus, the centrifugal force is proportional to steering anglex(velocity)². The centrifugal force applied to the driver (human viewer 100) in the lateral direction is proportional to the acceleration. Therefore, by using the acceleration in the lateral direction, the movement distance L1 proportional to (Vc)²×δ can be determined.

The acceleration is, for example, acquired by an acceleration meter 730b or the like provided in the vehicle 730. When the travel direction of the vehicle 730 changes to the right, the centrifugal force is applied in the left direction, and when the travel direction of the vehicle 730 changes to the left, the centrifugal force is applied in the right direction. Therefore, the direction of the acceleration Ac along the X-axis determined by the acceleration meter 730b is reverse to the direction of the change of the direction of the vehicle 730. At this time, for example, a negative value is used for the coefficient k, and thus the movement direction of the projection position 113 can be coincided with the movement direction of the eye 101. Moreover, for example, the polarity of the acceleration is reversed, and thus the movement direction of the projection position 113 can be coincided with the movement direction of the eye 101.

In using the acceleration as well, the gradient of the straight line of the movement distance L1 with respect to a value (the acceleration) proportional to (Vc)²xδ in increasing the movement distance L1 may be larger than that in decreasing the movement distance L1. The control unit 250 may perform a control to move the projection region 114 when the absolute value of the acceleration is greater than a predetermined value and not to move the projection region 114 when the absolute value is not greater than the predetermined value. The control unit 250 may determine the movement distance L1 according to zones predetermined with respect to the acceleration. In this case, the zones in increasing the movement distance L1 may be different from the zones in decreasing movement distance L1.

According to the embodiment, an automotive display apparatus that can project an image toward a human viewer with high positional precision is provided.

Hereinabove, embodiments are described with reference to specific examples. However, the embodiments are not limited to these specific examples. For example, one skilled in the art may similarly practice the embodiments by appropriately selecting specific configurations of components included in automotive display apparatuses such as image projection units, information acquisition units, control units, image data generation units, image generation units, projection units, etc., from known art. Such practice is included in the scope of the embodiments to the extent that similar effects are obtained.

Further, any two or more components of the specific examples may be combined within the extent of technical feasibility and are included in the scope of the embodiments to the extent that the spirit of the embodiments is included.

Moreover, all automotive display apparatuses practicable by an appropriate design modification by one skilled in the art based on the automotive display apparatuses described above as embodiments also are within the scope of the embodiments to the extent that the spirit of the embodiments is included.

Various other variations and modifications can be conceived by those skilled in the art within the spirit of the invention, and it is understood that such variations and modifications are also encompassed within the scope of the invention.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the invention.

## Claims

1. An automotive display apparatus (10, 20) comprising:
an image projection unit (115) configured to project a light flux (112) including an image by using a reflecting unit (711) to reflect the light flux (112); and
a control unit (250) configured to control an operation of the image projection unit (115) so that the image projection unit (115) moves a projection region (114) of the light flux (112) by an amount substantially proportional to (Vc)²xδ from a predetermined initial position in a horizontal direction orthogonal to an optical axis (114a) of the light flux (112) projected toward the predetermined initial position, where the Vc is a velocity of a vehicle (730) and the δ is a steering angle of the vehicle (730).

2. The apparatus (10, 20) according to claim 1, wherein
the control unit (250) is configured to determine the amount substantially proportional to (Vc)²×δ by a calculation by using the Vc and the δ.

3. The apparatus (10, 20) according to claim 1, further comprising an acceleration meter (730b) configured to detect an acceleration in a horizontal direction orthogonal to a direct advance direction of the vehicle (730),
the control unit (250) being configured to calculate the amount substantially proportional to (Vc)²×δ by using the acceleration.

4. The apparatus (20) according to any of claims 1-3, wherein
the control unit (250) is configured to determine the amount substantially proportional to (Vc)²×δ by using a coefficient defined based on a human viewer information including at least one selected from a body weight of a human viewer (100) to view the image, a body height of the human
viewer (100) , a sitting height of the human viewer (100), an age of the human viewer (100), and a setting from the human viewer (100).

5. The apparatus (20) according to claim 4, further comprising a human viewer information storage unit (240) configured to store the human viewer information regarding the human viewer (100),
the control unit (250) being configured to determine the amount substantially proportional to (Vc)²×δ by using a coefficient defined based on the human viewer information stored in the human viewer information storage unit (240).

6. The apparatus (10, 20) according to any of claims 1-5, wherein
the image projection unit (115) is configured to make a width of the light flux (112) in the initial position in a horizontal direction orthogonal to a direct advance direction of the vehicle (730) not more than 75 millimeters.

7. The apparatus (10, 20) according to any of claims 1-6, wherein
the control unit is configured to calculate a value proportional to (Vc)²×δ and to control the image projection unit (115) to move the projection region (114) when an absolute value of the calculated value is greater than a predetermined value.

8. The apparatus (10, 20) according to any of claims 1-7, wherein
the control unit (250) is configured to make an absolute value of a proportional coefficient of the amount with respect to the (Vc)²×δ when increasing the amount greater than an absolute value of the proportional coefficient when decreasing the amount.

9. The apparatus (10, 20) according to any of claims 1-8, wherein
the control unit (250) is configured to control the image projection unit (115) not to operate when the amount is in a zone predetermined with respect to the amount.

10. The apparatus (10, 20) according to any of claims 1-8, wherein
the control unit (250) is configured to control the image projection unit (115) not to operate when a value proportional to the (Vc)²×δ is increasing and within a first zone predetermined with respect to the value and when the value proportional to the (Vc)²×δ is decreasing and within a second zone predetermined with respect to the value, the second zone being different from the first zone.
